# EUROPEAN PATENT APPLICATION

(11) **EP 1 270 317 A1**
(43) Date of publication of application: **02.01.2003**
(21) Application number: 01118739.0
(22) Date of filing: 07.08.2001
(51) Int. Cl.: B60N 2/66

(54) **Lumbar support fastening apparatus for car seat**

(30) Priority: 25.06.2001 KR 2001036261
(71) Applicant: Hong, Jung-myung, Kyunggido 411-704 (KR)
(72) Inventor: Hong, Jung-myung, Kyunggido 411-704 (KR)
(74) Representative: KOHLER SCHMID + PARTNER

(57) **Abstract**

A lumbar support locking apparatus for a car seat includes: a support member (10) disposed between upper and lower fixed horizontal bars (31,32), which are provided inside a car seat, and a locking means (50) for locking the support plate (10) in the fixed horizontal bar (31,32), wherein the locking means bents the fixed horizontal bar to form a vertical guide portion, an elastic leg (51) is formed at both sides to open a front side toward the vertical guide portion and the fixed horizontal bar, and clip members (53) provided with a mounting groove (42) are fixed to the support plate (10) so that the clip member (50) fitted into the vertical guide portion is slid up and down while the clip member (50) fitted into the fixed horizontal bar is axially rotated to vary a support height of the lumbar.

## Description

### BACKGROUND OF THE INVENTION

### Field of the Invention

The present invention relates to a lumbar support locking apparatus for a car seat, and more particularly to, a lumbar support locking apparatus for a car seat which can comfortably support an occupant's lumbar to provide a comfortable seating feeling to the occupant, reduce the occupant's fatigue, and especially absorb the shock of the occupant's lumbar from a car collision at the rear. More particularly, the present invention relates to a lumbar support locking apparatus for a car seat in which a locking means is installed in a fixed horizontal bar to improve assembly and commercial value of the product.

### Discussion of the Related Art

In general, a driver's seat is separated from a seat next to the driver by a consol box. The separate seats must be designed so as to absorb the vibration and/or the shock from a road surface, support an occupant's body well to minimize an occupant's fatigue by traveling for a long time and to provide comfort to the occupant, and reduce the weight and the cost since the weight and the production cost occupy a considerably high rate in the whole rate. Also, the separate seats must be designed in relation to due consideration of the occupant's seating feeling in a stationary state, and in a smooth movement or a sudden start/stop of a car, and a support power for safely holding the occupant on the seat when turning the winding road.

The conventional seat includes a lumbar support fixed at a seat frame therein. The lumbar support includes a support plate for supporting the occupant's lumbar and a control unit for controlling the support plate. The lumbar support serves for supporting the occupant's lumbar in order to reduce the occupant's fatigue during driving for a long time. The lumbar support also serves to vary a force for supporting the occupant's lumbar.

It is known that the above-described lumbar support is mounted on a car seat, after a separate bracket is mounted in a fixed horizontal bar. However, in this case, as the process steps increases, the productivity may be reduced.

To reduce the process steps, as disclosed in a Korean Utility Model Application No. 99-2171, the applicant of this invention has suggested a method for fixing a clip to a fixed horizontal bar, the clip being formed by integrally cutting and deforming both end parts of a support plate.

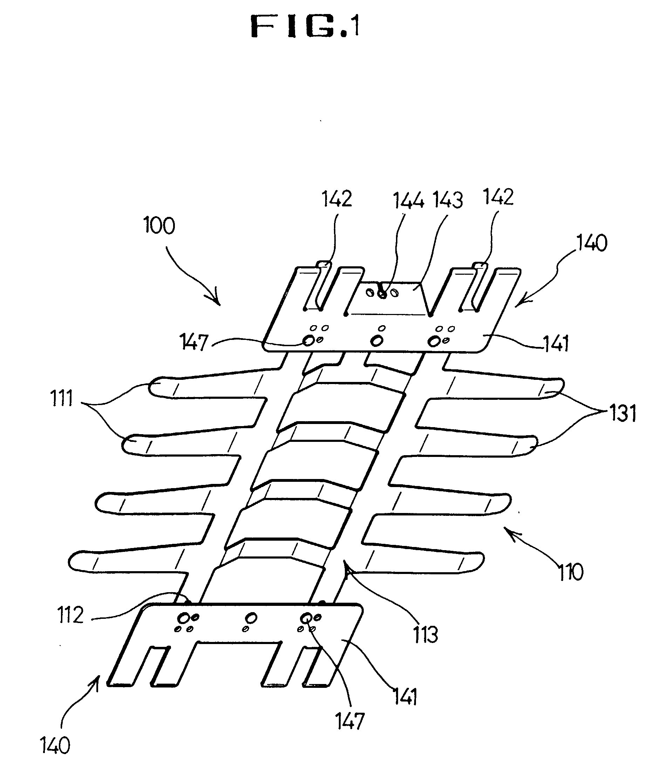

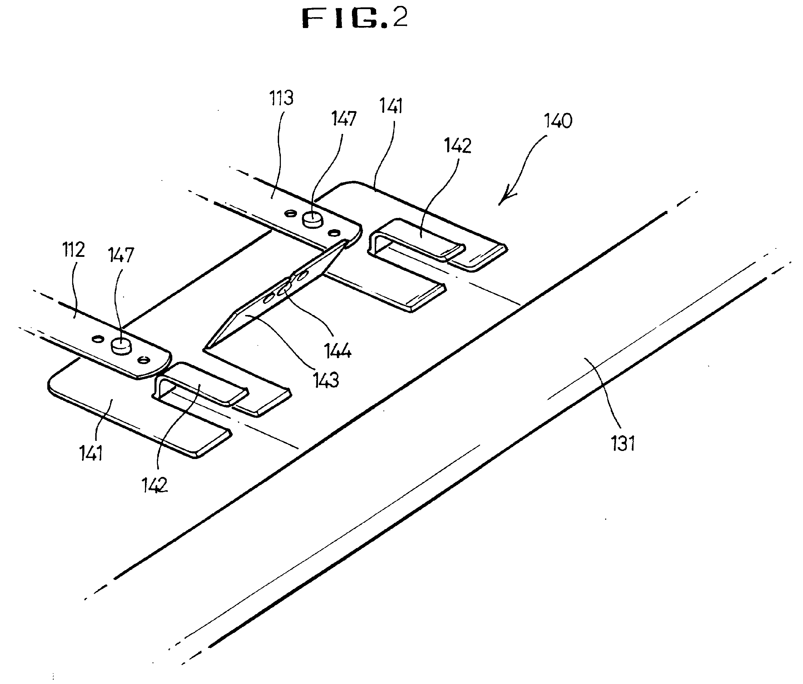

In other words, as shown in FIG. 1 and FIG. 2, a locking means 140 includes a locking plate 141, locking clips 142, and a connecting plate 143. The locking plate 141 is fitted to upper and lower sides of a support plate 113. The locking clips 142 are formed to cut from the locking plate 141, so that a gap is formed between the cut portions. The connecting plate 143 provided with the connecting groove 144 is formed to be bent with a predetermined slope angle at a central portion of the locking plate 141 at one side.

In other words, the locking means 140 fitted to a fixed horizontal bar 131 to fix a lumbar support 100 is formed by the locking plate 141 and the locking clips 142.

The locking plate 141 is of a plate spring material having excellent elasticity and rigidity. The locking plate 141 is unfolded at a constant thickness of a flat rectangular shape so that it is fitted to the upper and lower sides of the support plate 113 by fitting means 147. The locking clips 142 are bent at both sides of the locking plate 141 to have a gap.

At this time, the locking clips 142 are distanced from the locking plate 141 to have a gap which is at least equal to or smaller than a thickness of the fixed horizontal bar 131.

The locking clips 142 have elasticity between the cut portions of the locking plate 141. Accordingly, once the fixed horizontal bar 131 is fitted between the locking plate 141 and the locking clips 142, the lumbar support 100 is not detached from the fixed horizontal bar 131 even in case of vibration or impact of a vehicle.

Therefore, the locking clips 142 bent after being integrally cut from the locking plate 141 are partially opened at their distal ends so that they have more excellent locking characteristic when they are mounted in the fixed horizontal bar 131.

However, the related art lumbar support locking apparatus for a car seat has several problems.

As described above, the locking plate of a plate spring material having excellent elasticity and rigidity is unfolded at a constant thickness of a flat rectangular shape so that it is fitted to the upper and lower sides of the support plate by the fitting means. The locking clips are bent at both sides of the locking plate to have a gap. Accordingly, if the locking plate is mounted in the fixed horizontal bar and curved through the support height adjusting means, a problem arises in that excessive force that may cause deformation is applied to the locking means.

This is because that the locking means orthogonally fitted to the fixed horizontal bar is formed in a plate shape that cannot flexibly cope with variation of the support member curved toward one side. Even if the locking means is not directly damaged, the fitting means for fitting the locking means to the support member may be detached.

Furthermore, as the locking clips cut from the locking plate and opened to have a gap between the cut portions, processing time increases and the productivity is reduced, thereby resulting in that it is difficult for the manufacturer to obtain any profit.

Also, a problem arises in that a variable length of the support plate in a longitudinal direction for varying the lumbar support height is very short.

For this reason, it is impossible to adjust the projection height for supporting the lumbar support, thereby deteriorating the commercial value of the product.

### SUMMARY OF THE INVENTION

Accordingly, the present invention is directed to a lumbar support locking apparatus for a car seat that substantially obviates one or more of the problems due to limitations and disadvantages of the related art.

An object of the present invention is to provide a lumbar support locking apparatus for a car seat in which a locking means is easily fitted to a fixed horizontal bar so that a simplified process and a simplified locking operation can be obtained.

Another object of the present invention is to provide a lumbar support locking apparatus for a car seat in which both skilled engineers and novices can easily perform an assembly process.

Other object of the present invention is to provide a lumbar support locking apparatus for a car seat in which a projection height for supporting a lumbar is adjusted to improve commercial value of the product.

Additional features and advantages of the invention will be set forth in the description which follows, and in part will be apparent from the description, or may be learned by practice of the invention. The objectives and other advantages of the invention will be realized and attained by the scheme particularly pointed out in the written description and claims hereof as well as the appended drawings.

To achieve these and other advantages and in accordance with the purpose of the present invention, as embodied and broadly described, a lumbar support locking apparatus for a car seat according to the present invention includes: a support member 10 disposed between upper and lower fixed horizontal bars 31 and 32, which are provided inside a car seat 1, and formed of a plate spring material having excellent elasticity to support an occupant's lumbar, having a plurality of support wings 11 and a support plate 13, the support wings being formed to be bent at both sides and to support and surround the occupant's lumbar, and the support plate 13 being projected with a selectively curved portion at a central portion to support the occupant's lumbar; a support height adjusting means 20 for adjusting the projection height of the support plate 13 projected with a selectively curved portion, at one side of the support plate 13; and a locking means 40 for locking the support plate 13 in the fixed horizontal bar 31, wherein the locking means 40 bents the fixed horizontal bar 32 to form a vertical guide portion 33, an elastic leg 51 is formed at both sides to open a front side toward the vertical guide portion 33 and the fixed horizontal bar 31, and clip members 50 provided with a mounting groove 52 are fixed to the support plate 13 so that the clip member 50 fitted into the vertical guide portion 33 is slid up and down while the clip member 50 fitted into the fixed horizontal bar 31 is axially rotated to vary a support height of the lumbar.

In the preferred embodiment of the present invention, the clip members are slid up and down and rotated in case where the support plate is bent to be projected toward a curved surface by handling the support height adjusting means. Accordingly, curvature of the support plate is improved, and installation and handling characteristics are also improved because the locking means is maintained without any deformation or damage.

It is to be understood that both the foregoing general description and the following detailed description are exemplary and explanatory and are intended to provide further explanation of the invention as claimed.

### BRIEF DESCRIPTION OF THE ATTACHED DRAWINGS

The invention will be described in detail with reference to the following drawings in which like reference numerals refer to like elements wherein:
FIG. 1 is a perspective view illustrating a related art lumbar support;
FIG. 2 is a perspective view illustrating a partially exploded and enlarged locking means of a related art lumbar support;
FIG. 3 is a perspective view illustrating a shape of a lumbar support in accordance with the present invention;
FIG. 4 is a side plane view illustrating the operation relation between a lumbar support and a support height adjusting means in accordance with the present invention;
FIGS. 5a and 5b are a partially enlarged perspective view illustrating a shape and operation state of a clip member installed in a lumbar support in accordance with the present invention;
FIG. 6 is an enlarged perspective view illustrating a state where a lumbar support is fitted into a fixed horizontal bar of a car seat in accordance with the present invention;
FIG. 7 is a side cross-sectional view illustrating an installation state of a clip member by enlarging a portion "A" of FIG. 3; and
FIG. 8 is a rear side view illustrating an installation state of a clip member by enlarging a portion "A" of FIG. 3.

### DETAILED DESCRIPTION OF THE PREFERRED EMBODIMENTS

Reference will now be made in detail to the preferred embodiments of the present invention, examples of which are illustrated in the accompanying drawings.

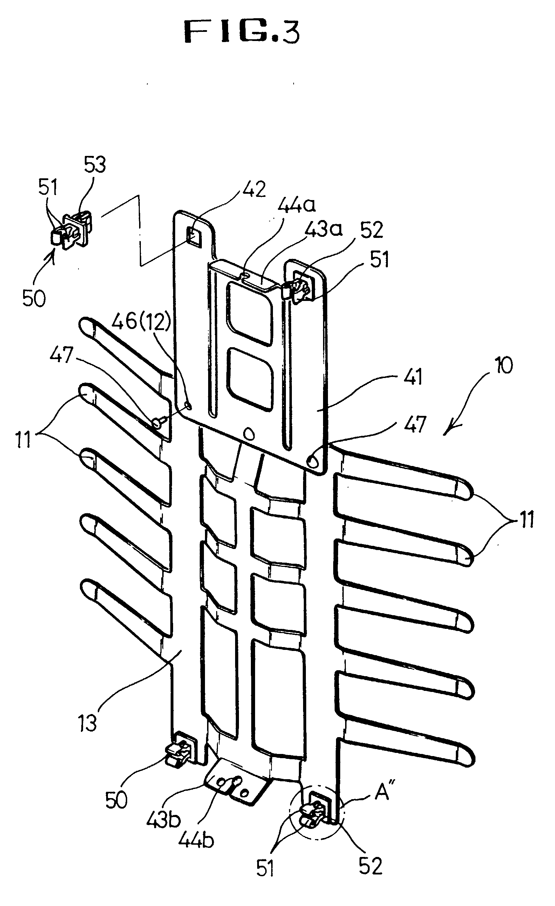

FIG. 3 is a perspective view illustrating main elements of a lumbar support in accordance with the present invention. Referring to FIG. 3, a locking means is installed in a fixed horizontal bar at one side and the other side of a support plate provided with a plurality of support wings.

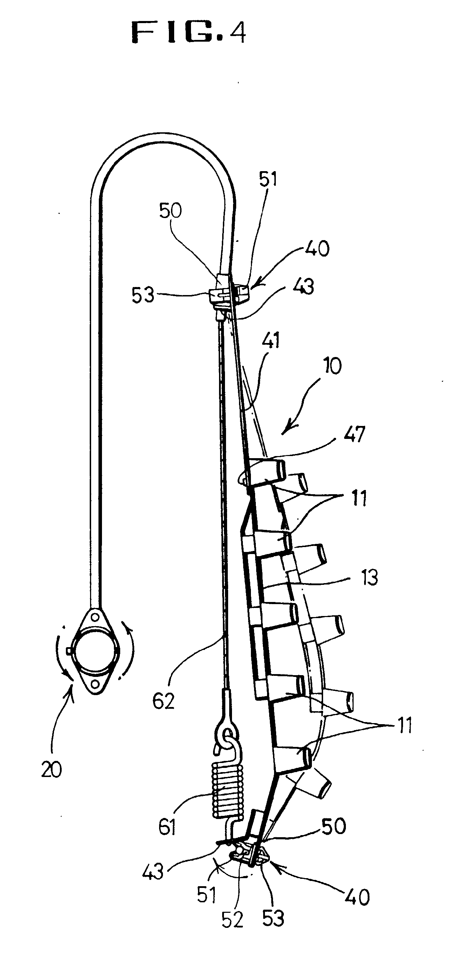

FIG. 4 is a side plane view illustrating a projection state of a lumbar support curved toward one side portion by means of the operation relation between the lumbar support and a support height adjusting means in accordance with the present invention.

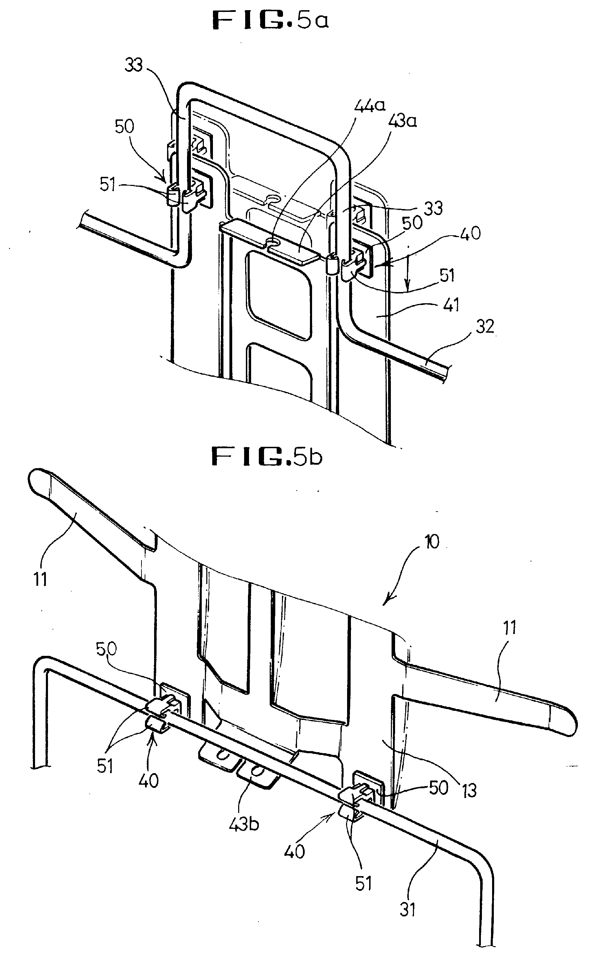

FIGS. 5a and 5b are a partially enlarged perspective view illustrating a shape and an operation state of a clip member installed in a locking plate of a lumbar support in accordance with the present invention. Referring to FIG. 5, the clip member installed in the locking plate has a front side opened in a longitudinal direction, while the clip member installed in an end portion of the other support plate is opened in a horizontal direction so that it is slid or rotated along the fixed horizontal bar.

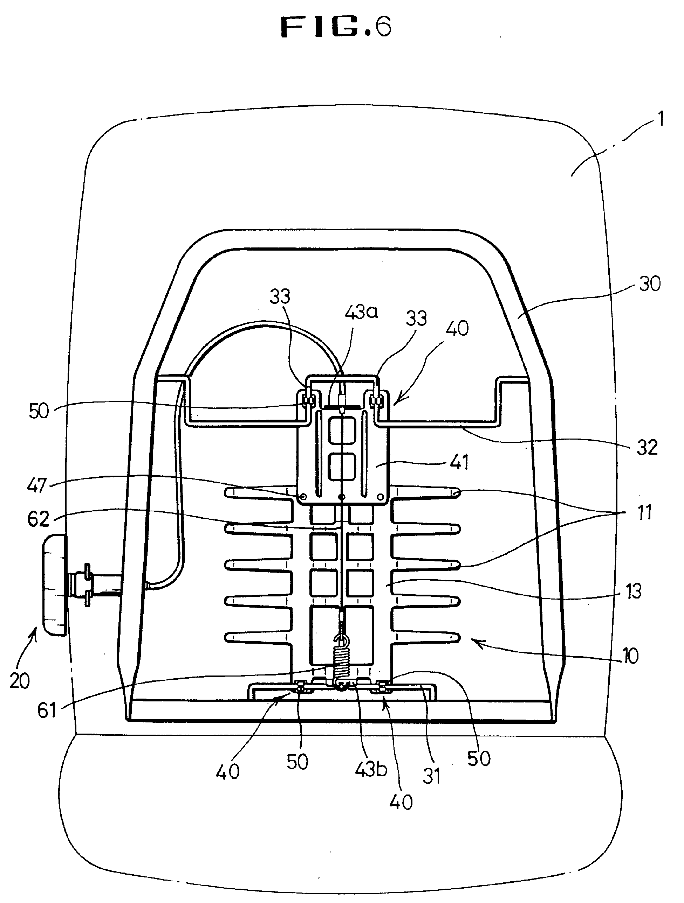

FIG. 6 illustrates an installation state where the lumbar support is fitted into the fixed horizontal bar of a car seat and the support height adjusting means is exposed toward one side of the car seat.

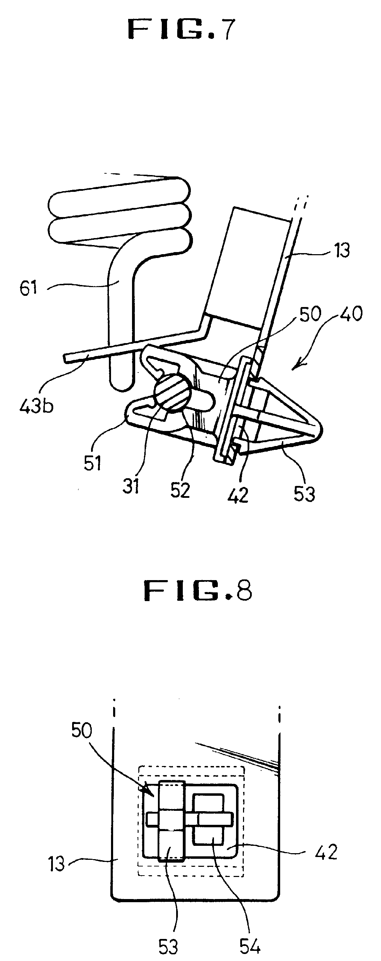

FIG. 7 is a side cross-sectional view illustrating an installation state of the clip member by enlarging a portion "A" of FIG. 3, and FIG. 8 is a rear side view illustrating an installation state of the clip member by enlarging the portion "A" of FIG. 3.

In more detail, as shown in FIGS. 3 and 4, a lumbar support locking apparatus for a car seat according to the present invention is configured in such a manner that a lumbar support for supporting an occupant's lumbar is easily mounted in upper and lower fixed horizontal bars 31 and 32 inside a car seat 1. The lumbar support locking apparatus for a car seat according to the present invention includes a support plate 13 and a locking means 40. The support plate 13 is of a plate spring material having excellent elasticity and absorbs impact and vibration. The locking means 40 serves to mount the support plate 13 in the upper and lower fixed horizontal bars 31 and 32.

A support member 10 is formed of a plate spring material having excellent elasticity. A plurality of support wings 11 are formed to be bent at both sides of the support member 10 so that they support an occupant's lumbar. Thus, the occupant's lumbar is surrounded by the support wings 11.

The locking means 40 includes a locking plate 41 and clip members 50. The locking plate 41 and the clip members 50 are fitted into the support plate 13. The locking plate 41 may be manufactured to form a single body with the support plate 13. In case where the locking plate 41 is separately manufactured due to complicated molding, the locking plate 41 is fitted into the support plate 13 by means of a fitting means 47. The fitting means 47 includes a fitting groove 12 formed in the support plate 13 and an installation groove 46 formed in the locking plate 41 to correspond to the fitting groove 12. The fitting means 47 serves to rigidly attach the locking plate 41 to the support plate 13 through the installation groove 46 using rivet or bolt.

The locking plate 41 is of a plate spring material having excellent elasticity and rigidity. Also, the locking plate 41 is unfolded at a constant thickness of a flat rectangular shape so that it is fitted to the upper portion of the support plate 13 by the fitting means 47. Assembly holes 42 are drilled in one distal end of the locking plate 41 and a distal end of the support plate at the other side of the locking plate 41, so that the clip members 50 are fitted thereto.

Connecting plates 43a and 43b are formed at central portions of the locking plate 41 and the support plate 13 so that they are inwardly bent at a predetermined slope angle to face each other. Holes 44a and 44b are respectively drilled at central portions of the connecting plates 43a and 43b.

The connecting plates 43a and 43b are to fix a wire member 62 and an end portion of a cable wrapping the wire member 62 when the support member 10 is projected with a curved portion by handling a support height adjusting means 20. The holes 44a and 44b are to pass through the wire member 62.

A spring member 61 is provided between the wire member 62 and the connecting plate 43b at the lower side to elastically maintain tension of the wire member 62.

In the meantime, the clip member 50 fitted into the assembly hole 42 is provided with an elastic leg 51 at both sides to open its front side and a mounting groove 52 formed inwardly. A clamping hook 53 is formed at the rear side of the elastic leg 51.

The clip member 50 is formed of a synthetic resin having excellent elasticity and rigidity. When the clip member 50 is fitted into the assembly hole 42, the clamping hook 53 is slightly shrunk by elasticity. Once the clip member 50 is fitted into the assembly hole 42, the clamping hook 53 is returned to its original state. Accordingly, the clip member 50 is not detached from the assembly hole 42.

As shown in FIG. 8 illustrating a portion "A" of FIG. 3, a projection 54 for preventing the clip member 50 from rotating is formed at one side of the clamping hook 53.

For installation of the clip member 50, the upper fixed horizontal bar 32 is bent to form a single body with a vertical guide portion 33 while the assembly holes 42 are drilled in four assembly positions of the lower fixed horizontal bar 31.

Therefore, in a state where the clip members 50 are fitted into the assembly holes 42, the clip members 50 are tightly fitted into the vertical guide portion 33 of the upper fixed horizontal bar 32 and the lower fixed horizontal bar 31 horizontally fixed to a seat frame 30. Thus, the elastic leg 51 is elastically opened and the fixed horizontal bars 31 and 32 are fixed into the mounting groove 52. As a result, the clip member 50 fitted into the vertical guide portion 33 is slid up and down while the clip member 50 fitted into the lower fixed horizontal bar 31 serves as a hinge which is axially rotated.

Consequently, the clip members 50 can easily be installed in the assembly holes 42 and the lumbar support is not detached from the fixed horizontal bars 31 and 32 in even case of external vibration and direct impact of a vehicle.

In this state, as shown in FIG. 6, once the occupant rotates a handle of the support height adjusting means 20 installed at one side of the car seat 1 in one direction, the wire member 62 connected with the support height adjusting means 20 is pulled.

Then, the clip member installed in the locking plate 41 is slid and guided to the vertical guide portion 33 of the upper fixed horizontal bar 32 fixed to the seat frame 30. At this time, the clip member installed in the assembly hole 42 at the distal end of the lower support plate 13 is axially rotated around the fixed horizontal bar 31.

The fixed horizontal bars 31 and 32 are formed in a rod shape considering assembly and easy operation for axial rotation.

Therefore, the clip member 50 installed in the upper locking plate 41 is downwardly slid while the clip member 50 installed in the lower side in the drawing is dot rotated and serves as a pivot. The support plate 13 is projected with a curved portion toward the occupant's lumbar.

On the contrary, once the occupant rotates the handle of the support height adjusting means 20 in the other direction, the wire member 62 is deformed in a longitudinal direction so that the distance between both ends of the support plate 13 is widen. Also, the curved projection is adjusted to a flat state.

Accordingly, in case where the lumbar support is installed in the fixed horizontal bars 31 and 32, the elastic leg 51 of the clip member 50 is opened by applying a predetermined force to the elastic leg 51 from the front side through the clip member 50. In this case, the elastic leg 51 is quickly locked, thereby improving assembly.

In addition, the support plate 13 is easily and smoothly projected with a curved portion by the operation of the support height adjusting means 20.

As aforementioned, the lumbar support locking apparatus for a car seat according to the present invention has the following advantages.

First, since the clip members are installed at both sides of the support plate to be simply fitted into the fixed horizontal bars, simplified locking operation can be obtained and installation performance can be improved. Also, both skilled engineers and novices can easily perform the assembly process.

Second, the support plate is easily projected with a curved portion by handling the support height adjusting means, so that the locking means is prevented from being damaged.

Finally, the projection height for supporting the occupant's lumbar is broadly adjusted to improve commercial value of the product, thereby resulting in that the manufacturer can obtain profits.

The foregoing embodiments are merely exemplary and are not to be construed as limiting the present invention. The present teachings can be readily applied to other types of apparatuses. The description of the present invention is intended to be illustrative, and not to limit the scope of the claims. Many alternatives, modifications, and variations will be apparent to those skilled in the art.

The lumbar support locking apparatus for a car seat according to the invention includes: a support member disposed between upper and lower fixed horizontal bars, which are provided inside a car seat, and formed of a plate spring material having excellent elasticity to support an occupant's lumbar, having a plurality of support wings and a support plate, the support wings being formed to be bent at both sides and to support and surround the occupant's lumbar, and the support plate being projected with a selectively curved portion at a central portion to support the occupant's lumbar; a support height adjusting means for adjusting the projection height of the support plate projected with a selectively curved portion, at one side of the support plate; and a locking means for locking the support plate in the fixed horizontal bar, wherein the locking means bents the fixed horizontal bar to form a vertical guide portion, an elastic leg is formed at both sides to open a front side toward the vertical guide portion and the fixed horizontal bar, and clip members provided with a mounting groove are fixed to the support plate so that the clip member fitted into the vertical guide portion is slid up and down while the clip member fitted into the fixed horizontal bar is axially rotated to vary a support height of the lumbar. Since the clip members are installed at both sides of the support plate to be simply fitted into the fixed horizontal bar, simplified locking operation can be obtained and installation performance can be improved. Furthermore, the support plate is easily projected with a curved portion by handling the support height adjusting means, so that the locking means is prevented from being damaged. Finally, the projection height for supporting the occupant's lumbar is broadly adjusted to improve commercial value of the product, thereby resulting in that the manufacturer can obtain profits.

## Claims

1. A lumbar support locking apparatus for a car seat comprising:
a support member disposed between upper and lower fixed horizontal bars, which are provided inside a car seat, and formed of a plate spring material having excellent elasticity to support an occupant's lumbar, having a plurality of support wings and a support plate, the support wings being formed to be bent at both sides and to support and surround the occupant's lumbar, and the support plate being projected with a selectively curved portion at a central portion to support the occupant's lumbar;
a support height adjusting means for adjusting the projection height of the support plate projected with a selectively curved portion, at one side of the support plate; and
a locking means for locking the support plate in the fixed horizontal bar,
wherein the locking means bents the fixed horizontal bar to form a vertical guide portion, an elastic leg is formed at both sides to open a front side toward the vertical guide portion and the fixed horizontal bar, and clip members provided with a mounting groove are fixed to the support plate so that the clip member fitted into the vertical guide portion is slid up and down while the clip member fitted into the fixed horizontal bar is axially rotated to vary a support height of the lumbar.

2. The lumbar support locking apparatus for a car seat of claim 1, wherein the clip members are provided to form a single body with a clamping hook at a rear side so that they are locked in assembly holes drilled in the support plate.

3. The lumbar support locking apparatus for a car seat of claim 2, wherein the clamping hook is provided with a projection for preventing the clip members from rotating.
